# EUROPEAN PATENT APPLICATION

(11) **EP 2 988 288 A1**
(43) Date of publication of application: **24.02.2016**
(21) Application number: 14181949.0
(22) Date of filing: 22.08.2014
(51) Int. Cl.: G09B 23/28

(54) **Medical simulator handpiece**

(71) Applicant: Moog B.V., 2150 AD Nieuw-Vennep (NL)
(72) Inventor: Karssen, Daniel, 2513 VN Den Haag (NL); Lammertse, Piet, 1181 SW Amstelveen (NL)
(74) Representative: Jones, John Bryn

(57) **Abstract**

A medical procedure simulator (100) has a computer (102) configured to run medical simulation software to simulate a medical procedure; at least one handpiece (112, 114) configured to be held in the hand of a user and manipulated by the user in a real space, which handpiece comprises an inertial measurement unit (220) for creation of position and / or orientation data of the handpiece in real space; and, a data link (222) to the computer from the handpiece for transmission of the position and / or orientation data.

## Description

The present invention is concerned with a handpiece for a medical simulator. More specifically, the present invention is concerned with a handpiece for use with an eye surgery simulator.

Simulators for medical procedures are known in the art, such as the applicant's Simodont (TM) dental trainer. Known simulators comprise a computer which controls the simulation and hosts a virtual environment, a VDU displaying the simulated environment, and one or two handpieces which may be connected to the computer to provide an input. The simulated environment comprises the subject, as well as virtual versions of tools controlled by the handpieces. The tools may be surgical instruments (scalpels, syringes etc) or other devices (such as mirrors or probes). The handpieces are connected to sensors which determine their position, which is used to control the position of the tools in the virtual environment. In more sophisticated systems, the handpieces are mounted on a haptic feedback system which allows the computer to control the forces the user feels through the handpieces. making a more realistic simulation possible.

Evidently the computer needs to know where the handpieces are at any given point in time, in order to utilise movement of the handpieces as a user input.

One prior art solution (used on the VRMagic EyeSi Cataract (TM) and the Denx DentSim (TM)) is to employ a vision system. This uses cameras to monitor and detect the position of the handpieces using image processing software. Typically the handpiece comprises some kind of visual element (e.g. a bright point or light) which the camera and associated image processing software can track. A problem with this solution is that the line of sight between the camera and the handpiece can be blocked in use which significantly reduces the accuracy of the system.

An alternative prior art solution is to utilise a gimbal between the handpiece and the computer, with rotary position encoders at each joint or pivot. The prior art SensAble

Phantom (TM) system and the applicant's SimoDont (TM) dental trainer use such a solution. The main drawbacks with this solution are (i) the size and (ii) the weight of the encoders and associated mounting structures. Size is a problem because in certain types of simulators (with the VDU positioned near the handpieces) a bulky gimbal can obscure the user's view. Further, in small-scale surgical operations (such as eye surgery), two handpieces may be used in close proximity, and large, bulky gimbals can clash. Excessive weight is problematic because this adds to the "unrealistic" feel of the system. In "real life" surgical operations, the handpiece is free (i.e. unconnected to any external structure). Although connecting the handpiece to a simulator will inevitable constrain its movement and add mass, creating an unrealistic feel, if the mass of the gimbal is kept low this effect can be mitigated. Adding sensors and associated support structure to the gimbal therefore increases its weight and reduces the realism in use.

The present invention aims to overcome these problems.

According to a first aspect of the invention there is provided a medical procedure simulator comprising:
a computer configured to run medical simulation software to simulate a medical procedure;
at least one handpiece configured to be held in the hand of a user and manipulated by the user in a real space, which handpiece comprises an inertial measurement unit for creation of position and / or orientation data of the handpiece in real space; and,
a data link to the computer from the handpiece for transmission of the position and / or orientation data.

Advantageously, the use of an IMU overcomes the disadvantages of both a prior art vision system (there is no "line of sight" to block) and gimbal-sensor arrangement (because no sensors are required on any gimbal, therefore it can be made very compact and light). Preferably the handpiece is connected to the simulator by at least one joint having free, unsensed articulation. The handpiece may be connected to the simulator by a gimbal having free unsensed articulation.

Preferably the handpiece is connected to the simulator by a handpiece mount, which handpiece mount is actuated to provide powered motion to the handpiece in at least one degree of freedom. It is preferable that:
the at least one joint is rotational;
the inertial measurement unit (220) is configured to create orientation data indicative of the rotational orientation of the handpiece; and,
in which the powered motion is linear.

Therefore haptic feedback and powered motion can be provided through the linear degrees of freedom, leaving the rotational degrees of freedom free to move (which movement is sensed by the IMU). The handpiece mount may therefore be driven by a haptic system configured to provide haptic feedback to the handpiece.

Preferably the handpiece comprises a first formation representing a first medical tool, which first formation comprises a sensor create first formation data indicative of actuation of the first formation. The first formation data is preferably transmitted to the computer over the data link. In this way the simulation is made more realistic because the user can apply forces to the tools in real space which will result in an action taking place in the simulated space. Preferably the position and / or orientation data is transmitted with a serial data bus. Beneficially, this allows several data sources to use the same data link. Preferably the serial data bus is digital Inter-Integrated Circuit (I²C).

A medical simulator and handpiece according to the present invention will now be described with reference to the following figures in which:
Figure 1 is a schematic view of a simulator comprising a handpiece in accordance with the present invention;
Figure 2 is a perspective view of a subassembly of the simulator of Figure 1;
Figure 3a is a further perspective view of the subassembly of Figure 2;
Figure 3b is a detail view of the area marked "b" in Figure 3a; and,

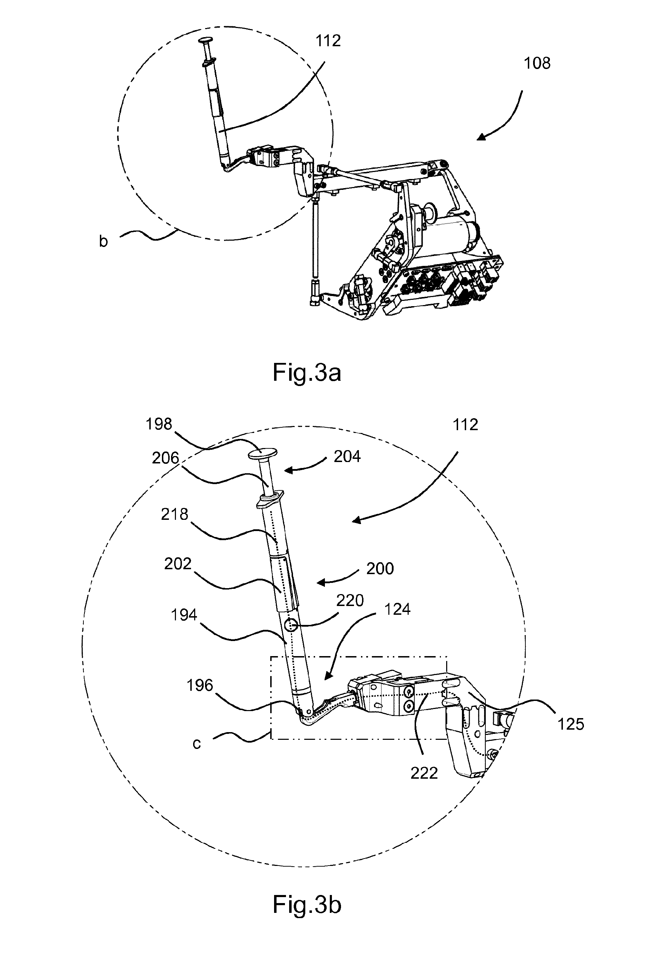

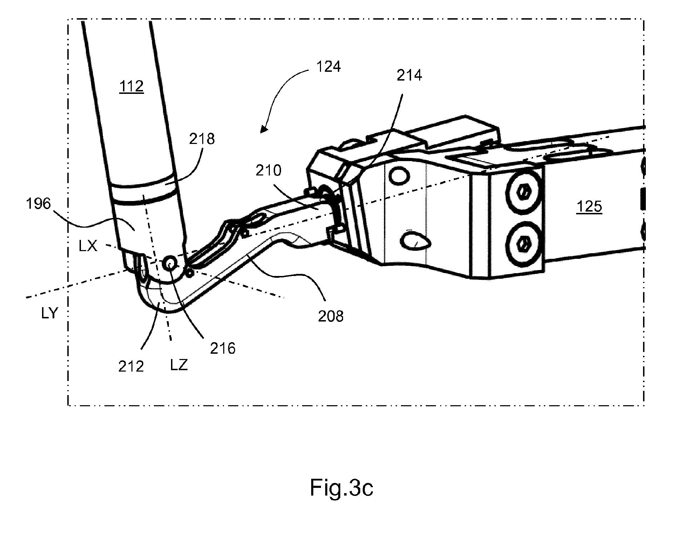

Figure 3b is a further detail view of the area marked "c" in Figure 3b.

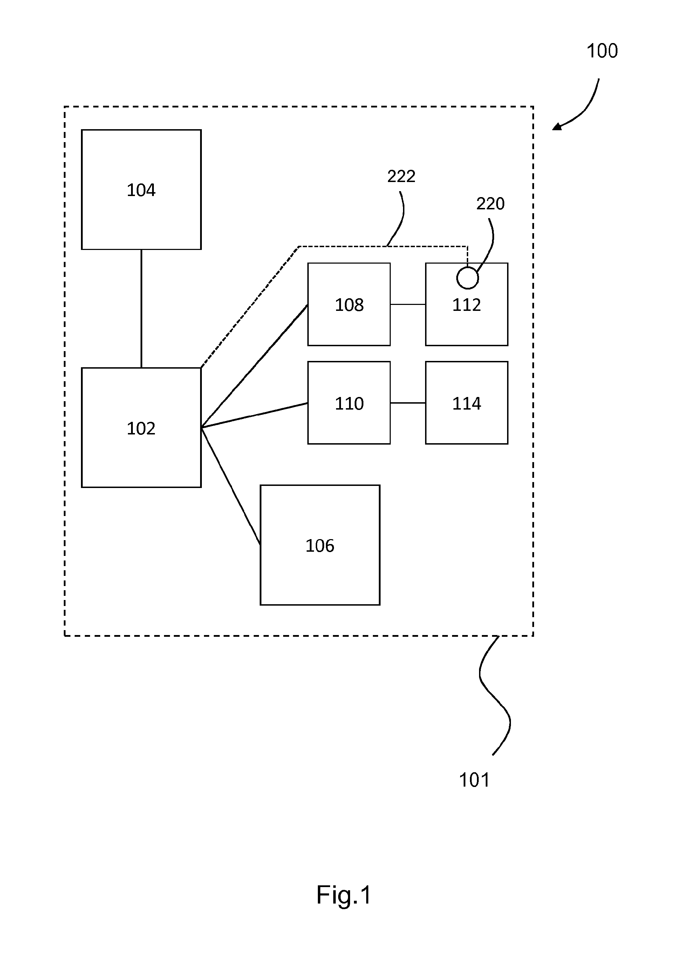

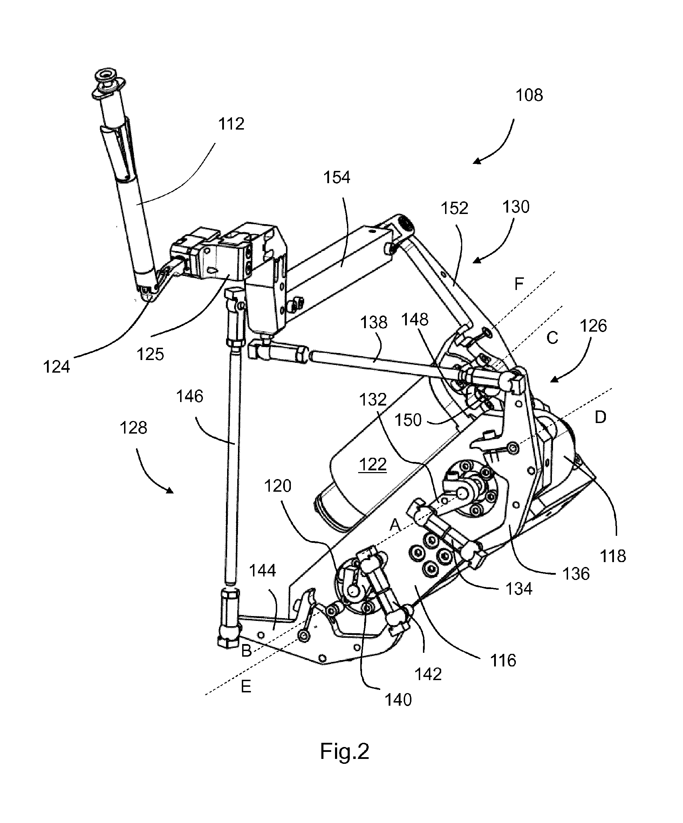

Figure 1 is a schematic view of an eye surgery simulator 100. The simulator 100 comprises a housing 101 in which a computer 102 having a memory and a processor. The processor is arranged to execute software stored on the memory, in particular software configured to simulate a medical procedure. The computer 102 is connected to a VDU 104, a model 106 and a first and second haptic system 108, 110 mounted to the housing 101. The haptic systems 108, 110 (described in detail below with reference to Figure 2) each comprise a first and second handpiece 112, 114 respectively. The simulator 100 is configured to accept voice commands from a user.

The model 106 represents part of the subject (for example a human head) and provides the necessary mechanical environment for the operation to take place. For example, the surgeon can rest his hands on the head during the procedure.

Referring to Figure 2, the first haptic system 108 is shown comprising the first handpiece 112. The first haptic system 108 comprises a frame 116 mounted to the housing 101. A first, second and third motor 118, 120, 122 are mounted to the housing 116. The first and second motors 118, 120 have parallel and offset output axes A, B with the third motor 122 having an axis C perpendicular to the axes A and B.

The first handpiece 112 (to be described) is mounted on a gimbal 124 for rotation in three degrees of freedom. The gimbal 124 is mounted to a handpiece mount 125 in the shape of an inverted "L". The handpiece mount 125 is driven in three dimensional space 116 by a first, second and third linkage 126, 128, 130.

The first linkage 126 comprises a crank 132 extending radially from the output of the first motor 118. The crank 126 is connected at a position spaced from the motor to a first link 134. The first link 134 is connected to a second link 136 pivoted to the frame 116 about a second link axis D (parallel to axis A). On the opposite side of the axis D to the first link 134, the second link 136 is connected to a first pushrod 138. The first pushrod 138 is connected to the handpiece mount 125.

Similarly, the second linkage 128 comprises a crank 140 extending radially from the output of the second motor 120. The crank 140 is connected at a position spaced from the motor to a third link 142. The third link 142 is connected to a fourth link 144 pivoted to the frame 116 about a fourth link axis E (parallel to axis B). On the opposite side of the axis E to the third link 142, the fourth link 144 is connected to a second pushrod 146. The second pushrod 146 is connected to the handpiece mount 125.

Similarly, the third linkage 130 comprises a crank 148 extending radially from the output of the third motor 122. The crank 148 is connected at a position spaced from the motor to a fifth link 150. The fifth link 150 is connected to a sixth link 152 pivoted to the frame 116 about a sixth link axis F (parallel to axis C). On the opposite side of the axis F to the fifth link 150, the sixth link 152 is connected to a third pushrod 154. The third pushrod 154 is connected to the handpiece mount 125.

The first, second and third pushrods 138, 146, 154 are oriented perpendicular to one another, and are arranged to move axially along their lengths in response to actuation of the respective motors 118, 120 ,122 respectively. As such, the global linear position of the gimbal mount 125, the gimbal 124 and hence the handpiece 112 is a function of the rotation of the motors 118, 120, 112.

Turning to Figures 3a and 3b, the first handpiece 112 and gimbal 124 are shown in more detail.

The first handpiece 112 comprises a generally cylindrical body 194 extending from a first end 196 where the handpiece 112 is connected to the gimbal 124 to a second end 198. Midway along the body 194 there is defined a first tool formation 200 comprising a pair of resiliently biased wings 202 configured to simulate the action of a pair of forceps. The wings 202 are connected to a force transducer to provide a signal indicating the degree of actuation for the computer 102. At the second end of the handpiece 112 there is provided a second tool formation 204 in the form of a syringe plunger 206. The plunger 206 is not movable in the body 194, but is connected to a force transducer to provide a signal indicating applied force for the computer 102. The first handpiece 112 is connected to the computer 102 by a four conductor data wire 222. This is shown schematically in Figure 1, and also in Figure 3b. Each of the tool formations 200, 204 are configured such that the respective force sensor produces a data signal for transmission along the wire 222. The data signals use the Inter-Integrated Circuit (I²C) protocol enabling serial transmission of multiple signals.

The gimbal 124 comprises a first gimbal member 208 extending from the gimbal mount 125. The first gimbal member 208 has a first end 210 and a second end 212. The first gimbal member 208 is generally elongate and is mounted to the gimbal mount 125 at its first end 210 by a first gimbal joint 214 for rotation about its main axis, and local rotation degree of freedom LY.

The second end 212 of the gimbal member 208 is connected to the first end 196 of the handpiece 112 via a second gimbal joint 216 having local rotational degree of freedom LX.

The body 196 defines an integral rotational joint 218 having local rotational degree of freedom LZ.

The body 194 as is evident from the above description, the handpiece 112 is configured for free rotation in three local degrees of freedom LX, LY and LZ. None of the joints are powered, or have encoders therein- the gimbal 124 and joints 214, 216, 218 can therefore be made very small as shown.

Turning to Figure 3b, an inertial measurement unit (IMU) 220 is positioned within the body 194 of the handpiece 112. The IMU 220 is configured to measure translational acceleration, rotational velocities and the magnetic field. As such, the IMU is also capable of determining the speed and displacement of the handpiece 112 using data processing techniques known in the art. The IMU 220 is assembled with a microchip (not shown) configured to convert the data output from the IMU into a digital Inter-Integrated Circuit (I²C). This data output is passed along the wire 222 along with the signals from the tool formations 200, 204 to the computer 102.

The computer 102 is configured to:
- both receive information indicating the position of the motor shafts, and to control actuation of the motors (global linear movement of the handpiece 112);
- to receive information indicative of actuation of the tool formations; and,
- to receive information indicative of the rotational position of the handpiece from the IMU (i.e. orientation).

A control scheme is used in which the position, orientation and actuation of the handpiece 112 is known by the computer 102, which is also able to provide haptic feedback to the handpiece 112 via the motors as determined by the characteristics of the virtual model. The position of the virtual tools within the virtual environment is displayed on the VDU 104.

By using data from the first haptic system 108, the tool formations and the IMU, the position of the virtual tools within the virtual environment is displayed on the VDU 104.

The second haptic system 110 is similar to the first haptic system 108 and as such will not be described in detail here.

Variations fall within the scope of the present invention. The data link 222 may be a wireless link, using e.g. bluetooth.

The IMU may be of any type which is capable of measuring motion, position and / or orientation. For example the IMU may measure only accelerations using numerical methods to determine velocity and displacement.

Other tools may be represented on the handpiece, for example (inter alia):
- Scissors;
- Scalpels;
- Weck spears;
- Cautery tools;
- Lens loops;
- Sinskey hooks;
- Phacoemulsification probes;
- Dentist's mirrors; and,
- Needles.

## Claims

1. A medical procedure simulator (100) comprising:
a computer (102) configured to run medical simulation software to simulate a medical procedure;
at least one handpiece (112, 114) configured to be held in the hand of a user and manipulated by the user in a real space, which handpiece comprises an inertial measurement unit (220) for creation of position and / or orientation data of the handpiece in real space; and,
a data link (222) to the computer from the handpiece for transmission of the position and / or orientation data.

2. A medical procedure simulator (100) according to claim 1, in which the handpiece is connected to the simulator by at least one unsensed joint (214, 216, 218).

3. A medical procedure simulator (100) according to claim 2, in which the handpiece is connected to the simulator by a gimbal (124) having free, unsensed articulation.

4. A medical procedure simulator (100) according to any of claim 2 or 3, in which the handpiece is connected to the simulator by a handpiece mount (125), which handpiece mount is actuated to provide powered motion to the handpiece in at least one degree of freedom.

5. A medical procedure simulator (100) according to claim 4, in which:
the at least one joint (214, 216, 218) is rotational;
the inertial measurement unit (220) is configured to create orientation data indicative of the rotational orientation of the handpiece; and,
in which the powered motion is linear.

6. A medical procedure simulator (100) according to claim 4 or 5, in which the handpiece mount is driven by a haptic system (108) configured to provide haptic feedback to the handpiece.

7. A medical procedure simulator (100) according to any preceding claim, in which the handpiece comprises a first formation (202, 206) representing a first medical tool, which first formation comprises a sensor configured to create first formation data indicative of actuation of the first formation.

8. A medical procedure simulator (100) according to claim 7, in which the first formation data is transmitted to the computer over the data link (222).

9. A medical procedure simulator (100) according to any preceding claim, in which the position and / or orientation data is transmitted with a serial data bus.

10. A medical procedure simulator (100) according to claim 9, in which the serial data bus is digital Inter-Integrated Circuit (I²C).
